# EUROPEAN PATENT APPLICATION

(11) **EP 3 663 805 A1**
(43) Date of publication of application: **10.06.2020**
(21) Application number: 17910500.2
(22) Date of filing: 29.09.2017
(51) Int. Cl.: G01S 19/24, H04B 7/185

(54) **APPARATUS AND METHOD FOR PROVIDING REAL-TIME LOCATION USING DATA SYNCHRONIZATION AND LOCATION ESTIMATION METHODS**

(30) Priority: 03.08.2017 KR 20170098545
(71) Applicant: Korea Aerospace Research Institute, Daejeon 34133 (KR)
(72) Inventor: HAN, Sang Hyuck, Daejeon 34020 (KR); CHO, Dong Hyun, Daejeon 34212 (KR); CHOI, Yeon Ju, Daejeon 34185 (KR); MOON, Sung Tae, Daejeon 35351 (KR); JANG, Jong Tai, Daejeon 34133 (KR); GONG, Hyeon Cheol, Daejeon 35244 (KR); KIM, Jong Chul, Daejeon 34140 (KR); HWANG, In Hee, Daejeon 34137 (KR); KIM, Hae Dong, Daejeon 34133 (KR); CHOI, Gi Hyuk, Daejeon 35249 (KR)
(74) Representative: V.O.
(86) International application number: PCT/KR2017/010898
(87) International publication number: WO 2019/027095

(57) **Abstract**

Provided is a method and apparatus for providing positions of a plurality of moving objects at a predetermined point in time, the apparatus including a synchronization module configured to receive position information of a moving object from a communicator and perform synchronization on the position information, a database configured to store first position information of the moving object, and a position estimation module configured to calculate second position information corresponding to a predetermined point in time based on the first position information.

## Description

### Technical Field

One or more example embodiments relate to a method and apparatus for providing a position of a moving object in real time and, more particularly, to a method and apparatus for synchronizing position information of a plurality of moving objects included in a moving object system and performing calculation by estimating a position at a predetermined point in time.

### Background Art

As operations of ultra-small satellites increase, a simultaneous operation of a plurality of satellites such as a satellite formation flight is occurring. A data synchronization technique for formation flight is disclosed in the prior art as the registered patent described later.

Low-orbit satellites may continuously move in real time and also consistently move even when information synchronization is performed. Thus, there is a desire for a method of calculating a position corresponding to a desired point in time based on synchronized position information.

### Disclosure of Invention

### Technical solutions

According to an aspect, there is provided a position providing apparatus including a synchronization module configured to receive position information of a moving object from a communicator and perform synchronization on the position information, a database configured to store first position information of the moving object, and a position estimation module configured to calculate second position information corresponding to a predetermined point in time based on the first position information.

The position estimation module may be configured to calculate the second position information using a J2 or J4 perturbation acceleration equation of the moving object.

The position providing apparatus may further include a position information receiver configured to receive position information of the position estimation module from a global navigation satellite system (GNSS). The position estimation module may be configured to calculate one of a distance from the position providing apparatus and positions of a plurality of moving object.

The position estimation module may include a propagator configured to calculate the second position information of the moving object. The propagator may be configured to calculate position information of the plurality of moving object at a predetermined point in time using one of a Runge-Kutta integrator and an extended Kalman filter type estimator.

According to another aspect, there is also provided a position providing method including receiving, by a synchronization module, position information of a moving object from a communicator and performing synchronization on the position information, storing, by a database, first position information of the moving object, and calculating, by a position estimation module, second position information corresponding to a predetermined point in time based on the first position information.

The calculating of the second position information may include calculating the second position information using a J2 or J4 perturbation acceleration equation of the moving object.

The position providing method may further include receiving, by a position information receiver, position information of the position estimation module from a GNSS.

The position providing method may further include calculating, by the position estimation module, one of a distance from the position providing apparatus and positions of a plurality of moving object. The calculating may include calculating, by a propagator included in the position estimation module, the second position information of the moving object.

The propagator may be configured to calculate position information of the plurality of moving object at a predetermined point in time using one of a Runge-Kutta integrator and an extended Kalman filter type estimator.

According to still another aspect, there is also provided a non-transitory computer-readable medium including a program for instructing a computer to perform the position providing method.

### Brief Description of Drawings

FIG. 1 illustrates a moving body system according to an example embodiment.
FIG. 2 illustrates a configuration of a moving body according to an example embodiment.
FIG. 3 is a block diagram illustrating a position providing method according to example embodiment.
FIG. 4 is a diagram illustrating a position providing method according to example embodiment.

### Best Mode for Carrying Out the Invention

Hereinafter, example embodiments will be described in detail with reference to the accompanying drawings. It should be understood, however, that there is no intent to limit this disclosure to the particular example embodiments disclosed. Like numbers refer to like elements throughout the description of the figures.

Terminologies used herein are defined to appropriately describe the example embodiments of the present disclosure and thus may be changed depending on a user, the intent of an operator, or a custom. Accordingly, the terminologies must be defined based on the following overall description of this specification.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The proposed position providing apparatus and method may be applied to various mobile objects including a satellite, a variety of aircraft, a drone, a robot, a ship, a vehicle, and the term "moving object" is used uniformly below.

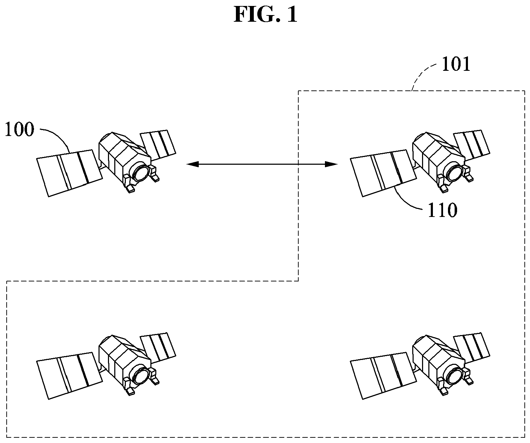

FIG. 1 illustrates a moving body system according to an example embodiment.

Referring to FIG. 1, in the moving body system, a plurality of moving objects may fly as a cluster.

A position estimation module provided in a first moving object 100 may select a second moving object 110 of which position information is to be synchronized with that of the first moving object 100 from moving objects 101 flying as a cluster with the first moving object 100. The same position providing apparatus may be provided in the second moving object 110 and the moving objects 101 other than the first moving object 100.

Also, the position estimation module in the second moving object 110 may select the first moving object 100 as a target for synchronizing position information with that of a target satellite, for example, the second moving object 110. The first moving object 100 may be a moving object that performs a position providing method among the moving objects flying as the cluster. In the example of FIG. 1, the first moving object 100 may be the moving object performing the position providing method. However, when the second moving object 110 performs the position providing method, the corresponding moving object may be referred to as a first moving object.

In terms of a position information synchronization method performed by a position information synchronization module, reference may be made to Korean Patent No. 10-1620233.

The position estimation module in the first moving object 100 may calculate a position of another moving object around the first moving object 100 at a predetermined point in time.

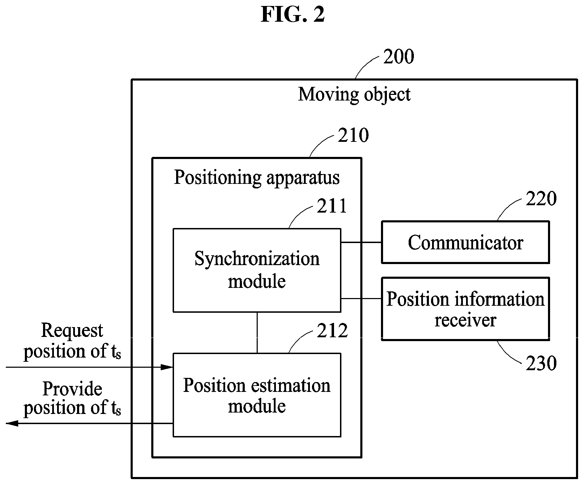

FIG. 2 illustrates a configuration of a moving body according to an example embodiment. A moving object 200 may include a position providing apparatus 210, a communicator 220, and a position information receiver 230.

The position providing apparatus 210 may include a synchronization module 211 and a position estimation module 212. The synchronization module 211 may receive first position information of another moving object from the communicator 220 and receive a current position of a position estimation module from the position information receiver 230.

Specifically, the communicator 220 may be an element configured to communicate with another moving object. There is no limitation on a communication method and various methods using wireless communication may be used.

The communicator 220 may receive the first position information from the other moving object and transfer the first position information to the synchronization module 211, or may receive synchronization information of the other moving object and transfer the synchronization information. In terms of a synchronization method performed by the synchronization module 211 using the communicator 220, reference may be made to Korean Patent No. 10-1620233 as mentioned above.

The position information receiver 230 may receive current position information of a moving object including a position estimation module from a global navigation satellite system (GNSS). A type of GNSS may not be limited thereto and thus, may be one of, for example, a global positioning system (GPS), a global navigation satellite system (GLONASS), and a Galileo system.

The position information receiver 230 may transfer the received current position information to a synchronization module.

The synchronization module 211 may include a position information database to store position information received from the communicator 220 and the position information receiver 230. Also, synchronization may be performed using position information that is most recently received.

The position estimation module 212 may estimate a position of a target moving object based on a variety of information stored in the synchronization module. For example, position information of the target moving object may be used to calculate a position corresponding to a predetermined point in time, for example, a time tₛ.

The position information of the target moving object may be position information corresponding to a point in time closest to the time tₛ. Thus, when the predetermined point in time is a future point in time, latest position information may be used. Also, additional correction may be performed based on previous position information.

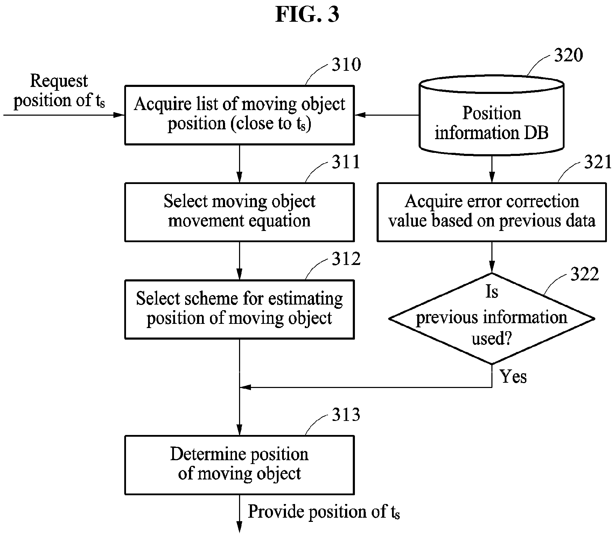

When the position corresponding to the time tₛ is requested, the position estimation module 212 may calculate position information of time tₛ and provide the calculated position information. A method of calculating the position information of the predetermined time will be further described with reference to FIG. 3.

FIG. 3 is a block diagram illustrating a position providing method according to example embodiment.

Referring to FIG. 3, the position estimation module 212 may determine a position of another moving object, for example, the moving object 110. When a position corresponding to a time tₛ is requested, the position providing method may acquire, in operation 310, a position list of the moving object 110 from a position information database 320. The acquired position list of the moving object 110 may be a list of positions close to the time tₛ to be determined.

The position providing method may select, in operation 311, a movement equation of the moving object 110. For example, when the moving object 110 is a satellite, the movement equation may be, but not be limited to, a J2 or J4 perturbation acceleration equation. Also, when the moving object 110 is a drone, a linear movement equation may be used. The position estimation module 212 of the moving object 100 may select an appropriate movement equation based on a type of moving object.

The position providing method may select, in operation 312, a scheme for estimating a position of a moving object. To estimate the position of the moving object 110, a propagator, an estimator, or a simple extrapolation method may be used. When the propagator is used, a Runge-Kutta integrator may be used to estimate a position of a target moving object. When the estimator is used, an extended Kalman filter (EKF) may be used to estimate a position of a target moving object.

The propagator may be applied in various ways including a Runge-Kutta fourth-order algorithm that is easy to be implemented, and a Runge-Kutta eighth-order or ninth-order algorithm having a high accuracy. However, embodiments are not limited to an order of each algorithm and an application may vary depending on an example. For example, the Runge-Kutta fourth-order algorithm may be used when a fast calculation is required rather than the high accuracy, and the Runge-Kutta ninth-order algorithm may be used when the high accuracy is required rather than the fast calculation.

As such, the position providing method may determine, in operation 313, a position of the moving object 110 at the time tₛ. In operation 313, to increase an accuracy, previous data may be used to determine the position of the moving object.

The position providing method may acquire, in operation 321, an error correction value based on the previous data from the position information database 320. The position providing method may determine, in operation 322, whether the previous data is to be used. When it is determined that the previous data is to be used, the position providing method may apply the correction value to determine the position of the moving object in operation 313.

Correction for improving the accuracy based on the previous data may be performed and also, may not be performed depending on an example.

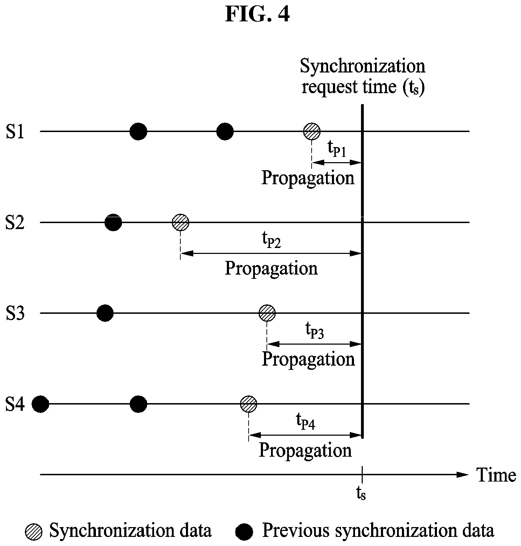

FIG. 4 is a diagram illustrating a position providing method according to example embodiment.

Synchronization data of moving objects S1 through S4 at a synchronization request time, for example, the time tₛ may be difference from one another. Basically, a difference between a synchronization data generation time and the synchronization request time may cause the synchronization data to be different from accurate position information at a synchronization time.

Referring to FIG. 4, the moving object S1 may have a relatively small difference tₚ₁ between a latest synchronization data generation time and the synchronization request time. Also, the moving object S2 may have a relatively large difference tₚ₂ between the latest synchronization data generation time and the synchronization request time. In FIG. 4, a time difference is denoted by tₚ. The time difference tₚ may be an error due to a difference in propagation time between moving objects. Also, the moving objects may have different synchronization data generation periods. In the same interval of FIG. 4, the moving objects S1 and S4 may generate three items of synchronization data, and the moving objects S2 and S3 may generate two items of synchronization data. As such, when calculating the position information of the moving objects, a difference may occur due to the different synchronization data generation periods.

To calculate a position of the moving object 110 at a position request time, for example, the time tₛ, the position estimation module 212 may use synchronization data (indicated by a hatched circle) closest from the position request time. When an increased accuracy is required, a correction value based on previous synchronization data (indicated by a solid circle) may be used.

The aforementioned position information may include, for example, coordinates and a speed of a moving object. In this example, the coordinates may be coordinates on a three dimensional coordinate system of X, Y, and Z axes, and may configure the position information without restrictions.

For example, when a GPS receiver is used, the position information may include a portion or all of ephemeris data of each GPS satellite and measurements of pseudo ranges between the GPS satellite and the GPS receiver.

The position information may also include information to be used for improving a position accuracy.

The proposed position estimation module may be applied to various fields such as satellite rendezvous docking, formation flight operation, removal of space waste, and collision avoidance by measuring a distance between satellites.

The units described herein may be implemented using hardware components and software components. For example, the hardware components may include microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The methods according to the above-described embodiments may be recorded, stored, or fixed in one or more non-transitory computer-readable media that includes program instructions to be implemented by a computer to cause a processor to execute or perform the program instructions. The media may also include, alone or in combination with the program instructions, data files, data structures, and the like. The program instructions recorded on the media may be those specially designed and constructed, or they may be of the kind well-known and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations and methods described above, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A position providing apparatus comprising:
a synchronization module configured to receive position information of a moving object from a communicator and perform synchronization on the position information;
a database configured to store first position information of the moving object; and
a position estimation module configured to calculate second position information corresponding to a predetermined point in time based on the first position information.

2. The position providing apparatus of claim 1, wherein the position estimation module is configured to calculate the second position information using a J2 or J4 perturbation acceleration equation of the moving object.

3. The position providing apparatus of claim 2, further comprising:
a position information receiver configured to receive position information of the position estimation module from a global navigation satellite system (GNSS).

4. The position providing apparatus of claim 3, wherein the position estimation module is configured to calculate one of a distance from the position providing apparatus and positions of a plurality of moving object.

5. The position providing apparatus of claim 4, wherein the position estimation module comprises a propagator configured to calculate the second position information of the moving object.

6. The position providing apparatus of claim 5, wherein the propagator is configured to calculate position information of the plurality of moving object at a predetermined point in time using one of a Runge-Kutta integrator and an extended Kalman filter type estimator.

7. A position providing method comprising:
receiving, by a synchronization module, position information of a moving object from a communicator and performing synchronization on the position information;
storing, by a database, first position information of the moving object; and
calculating, by a position estimation module, second position information corresponding to a predetermined point in time based on the first position information.

8. The position providing method of claim 7, wherein the calculating of the second position information comprises calculating the second position information using a J2 or J4 perturbation acceleration equation of the moving object.

9. The position providing method of claim 8, further comprising:
receiving, by a position information receiver, position information of the position estimation module from a global navigation satellite system (GNSS).

10. The position providing method of claim 9, further comprising:
calculating, by the position estimation module, one of a distance from the position providing apparatus and positions of a plurality of moving object.

11. The position providing method of claim 10, wherein the calculating comprises calculating, by a propagator included in the position estimation module, the second position information of the moving object.

12. The position providing method of claim 11, wherein the propagator is configured to calculate position information of the plurality of moving object at a predetermined point in time using one of a Runge-Kutta integrator and an extended Kalman filter type estimator.

13. A non-transitory computer-readable medium comprising a program for instructing a computer to perform the position providing method of claim 7.
